# FASCICULE DE BREVET EUROPEEN

(11) **EP 1 495 441 B1**
(45) Date de publication et mention de la délivrance du brevet: **11.03.2009**
(21) Numéro de dépôt: 03740598.2
(22) Date de dépôt: 11.04.2003
(51) Int. Cl.: G06K 19/06, G06K 1/12

(54) **SYST ME DE MARQUAGE MAGNETIQUE, PROCEDE ET MACHINE POUR SA FABRICATION**
MAGNETISCHES MARKIERUNGSSYSTEM, VERFAHREN UND MASCHINE ZU SEINER HERSTELLUNG
MAGNETIC MARKING SYSTEM, METHOD AND MACHINE FOR PRODUCING THE SAME

(30) Priorité: 12.04.2002 FR 0204607
(43) Date de publication de la demande: 12.01.2005
(73) Titulaire: Cryptic, 75002 Paris (FR)
(72) Inventeur: BOULAY, Bernard, F-69250 Poleymieux au Mont d'Or (FR)
(74) Mandataire: Bratel, Gérard
(86) Numéro de dépôt international: PCT/FR2003/001162
(87) Numéro de publication internationale: WO 2003/088137

(56) Documents cités:
- EP-A- 0 492 407
- EP-A- 0 667 592
- WO-A-01/20568
- WO-A-01/29755
- WO-A-97/14126
- FR-A- 2 760 682
- US-A- 4 242 789
- US-A- 5 020 581
- PATENT ABSTRACTS OF JAPAN vol. 1997, no. 03, 31 mars 1997 (1997-03-31) & JP 08 305971 A (NHK SPRING CO LTD), 22 novembre 1996 (1996-11-22)

## Description

La présente invention concerne de façon générale, le marquage d'articles, de produits ou d'objets, en vue de leur identification et/ou de leur authentification. Cette invention se rapporte, plus particulièrement, à un système de marquage sécurisé, par "étiquette magnétiquement codée" ou analogue pouvant être "lue" à l'aide d'un détecteur approprié. Le système de marquage selon l'invention possède des applications diverses :
- Protection contre la contrefaçon de produits industriels, par authentification des produits originaux ;
- Traçabilité de produits ou d'articles, par lot ou série de produits, ou éventuellement par article individuel ;
- Identification de produits ou d'articles, dans les circuits commerciaux, en complément ou éventuellement en remplacement du code-barre optique traditionnel.

L'identification d'articles et de produits par code-barre optique est actuellement bien connue, mais elle comporte des inconvénients. En particulier, un code-barre optique peut être facilement reproduit à l'aide d'un scanner ou d'un photocopieur du commerce, ou modifié, de sorte qu'il n'offre aucune véritable sécurité. De plus, le caractère nécessairement visible d'un code-barre optique peut entraîner des inconvénients d'ordre esthétique, pour certains genres d'objets ou articles.

Des systèmes de marquage par étiquettes magnétiques ont été déjà envisagés, même si actuellement ceux-ci sont peu diffusés. A titre d'exemples, on peut ici citer les propositions contenues dans les documents FR 2344346, US 4964951, US 5175419 et US 5729201. Ces documents divulguent :
- Utilisation de bandes magnétisées parallèles plus ou moins larges, donc trop facilement visibles (non transparentes) ;
- Utilisation de fils de longueur variables, combinés à des aimants, d'où une réalisation complexe ;
- Combinaison de fils à caractéristiques magnétiques différenciées ;
- Simple association de fils aimantés tous équidistants, interdisant de ce fait toute possibilité de codage.

La plupart des solutions déjà proposées restent donc assez complexes, donc coûteuses, en faisant notamment appel à des phénomènes magnétiques complexes et mal maîtrisés, sans qu'il en résulte une sécurité améliorée. En particulier, pour certains systèmes qui exploitent la longueur de fils ou bandes à propriétés magnétiques, une interruption de ces fils ou bandes peut provoquer une modification de la réponse du système. Par ailleurs, les systèmes connus n'offrent qu'un nombre limité de combinaisons pour réaliser un véritable codage, analogue à un code-barre traditionnel, ou bien ils n'y parviennent qu'au prix d'une complication excessive, tant au niveau de l'étiquette elle-même qu'au niveau du détecteur à utiliser pour "lire" cette étiquette.

Par le document WO 01/29755, on déjà connaît un marquage magnétique comprenant, posés sur ou dans un support, des fils parallèles à propriétés ferromagnétiques ultradouces, en particulier des filaments ferromagnétiques amorphes gainés de verre, ces fils étant disposés de manière à former un code binaire détectable à l'aide d'un dispositif détecteur adapté, désigné comme tête de lecture, déplacé au-dessus du marquage. Le code binaire résulte de l'espacement des fils consécutifs selon une distance courte ou selon une distance plus grande. Le début de la zone de lecture n'est pas repéré, et les fils ne sont pas posés dans des positions préétablies, compte tenu de la variabilité de leurs espacements.

La présente invention vise à remédier à l'ensemble de ces inconvénients, en fournissant un système de marquage magnétique qui, tout en étant particulièrement simple et discret, s'avère extrêmement fiable et permet un codage avec des combinaisons très nombreuses.

A cet effet, l'invention a essentiellement pour objet un marquage magnétique, qui comprend, posés sur ou dans un support, des fils parallèles à propriétés ferromagnétiques ultradouces, en particulier des filaments ferromagnétiques amorphes gainés de verre et réalisés dans un alliage magnétique amorphe composé de cobalt ou de fer, de nickel, de bore, de silicium et de carbone, l'âme métallique des filaments possédant un diamètre de l'ordre d'une dizaine à quelques dizaines de microns, l'épaisseur de la gaine de verre ne dépassant pas quelques microns, et le diamètre total des filaments ne dépassant pas 50 microns, ces fils étant disposés de manière à former un code binaire détectable, caractérisé en ce que les fils comprennent un premier fil pour le repérage du début d'une zone de lecture, dans laquelle sont positionnés le ou les fils définissant le code binaire, fils qui est ou sont posés dans des positions parallèles préétablie séparées par un intervalle constant selon une trame préétablie, les fils présents ou absents définissant le code binaire.

Dans une forme de réalisation de l'invention, le support est du type bidimensionnel et constitué par une feuille de matière adhésive, qui fixe les fils à propriétés ferromagnétiques ultra-douces dans leurs positions préétablies. Cette feuille-support adhésive est avantageusement recouverte, au moins dans son état initial, par une feuille protectrice, du genre papier siliconé, qui ainsi recouvre aussi les fils.

En variante, le support est de type tridimensionnel, auquel cas les fils à propriétés ferromagnétiques sont noyés dans l'épaisseur de ce support à une profondeur faible, en comparaison à la distance de deux fils voisins, pour permettre dans tous les cas une détection par contact ou par quasi-contact, à l'aide d'un détecteur électro-magnétique se déplaçant sur la surface.

Les fils utilisés pour la réalisation d'un tel marquage sont, de préférence, des filaments ferromagnétiques amorphes gainés de verre, dont le mode de fabrication est expliqué dans : "Ferromagnetic resonance in amorphous magnetic wires", de S.A. BARANON et al., Phys. Met. Metall., N° 1, volume 67, page 70 à 75, 1989.

Le diamètre de l'âme métallique de tels filaments est de l'ordre d'une dizaine à quelques dizaines de microns, alors que l'épaisseur de la gaine de verre ne dépasse pas quelques microns, de sorte que le diamètre total des filaments ne dépasse pas 50 microns, et que les filaments peuvent être noyés dans la masse adhésive du support. L'âme métallique de ces filaments est réalisée dans un alliage magnétique amorphe essentiellement composé de cobalt ou de fer, de nickel, de bore, de silicium et de carbone, dans des proportions variables pouvant être :
- Fe ou Co > 40%,
- 0 < Ni < 20 %,
- 18 % < Si + B + C < 35 %
d'autres éléments pouvant être aussi introduits avec des teneurs inférieures à 7 %.

De tels fils, de par leur structure amorphe, peuvent présenter selon leur composition un coefficient de magnétostriction positif ou négatif, et ils possèdent un champ magnétique à saturation (champ coercitif) relativement faible (de 50 à 500 A/m), ces propriétés étant variables en fonction de la composition de l'alliage ainsi que des proportions relatives d'alliage et de verre. Une description plus précise sur les propriétés magnétiques de ces fils peut être trouvée dans : "Magnetic hysteresis in glass-covered and water-quenched amorphous wires" de H. CHIRIAC et al., Journal of Magnetism and Magnetic Materials 177-181, pages 205 et 206, 1998.

En ce qui concerne le dispositif de détection, à utiliser pour "lire" les marquages, il s'agit avantageusement d'un dispositif portable, constitué d'une bobine d'excitation permettant de créer, dans l'espace ou voisinage immédiat du fil, un champ magnétique alternatif d'intensité supérieure au champ de saturation du fil à détecter, et de deux bobines de réception équilibrées, montées en opposition, de manière à ne détecter aucun signal de réponse en l'absence de fil situé à proximité, à l'intérieur de la zone volumique d'excitation. En revanche, lorsqu'un des fils ferromagnétiques d'un marquage est proche de la bobine d'excitation, celui-ci va subir l'influence de son champ magnétique et son aimantation induite va décrire un cycle d'hystérésis à la même fréquence que l'excitation. Le fil va alors réémettre un champ électro-magnétique de même fréquence qui sera détecté essentiellement par celle des deux bobines de réception située le plus proche du fil, grâce à une conception appropriée du détecteur. Par un traitement approprié du signal reçu ainsi sur le dispositif de détection, il est possible de déterminer la présence d'un fil à proximité du dispositif de détection. En conséquence, par déplacement de ce dispositif de détection portable, dans une direction transversale aux fils de marquage magnétique, il devient possible de "lire" instantanément le code binaire porté par ce marquage.

Ainsi, l'idée à la base de l'invention consiste en l'utilisation de fils ferromagnétiques de nature identique, possédant tous les mêmes propriétés magnétiques ultra-douces permettant leur détection à l'aide d'une excitation électromagnétique de proximité, et de faible puissance (cette détection étant indépendante de la longueur des fils), ces fils étant positionnés de manière précise sur ou dans un support, à la manière d'un code-barre. Le système de marquage ainsi constitué comporte, en comparaison avec toutes les solutions précédemment proposées, des avantages nombreux et importants :
- Les fils utilisés pouvant posséder un diamètre très réduit, compris entre dix et cinquante microns, le système reste invisible à l'oeil nu, et aussi imperceptible au toucher. Ceci permet de placer les fils sur une feuille-support transparente, par exemple en matière plastique transparente, l'ensemble pouvant être placé sur d'autres étiquettes normales en restant invisible.
- Les possibilités de codage sont presque illimitées, compte tenu du très grand nombre de combinaisons possibles du nombre de fils et du positionnement relatif de ces fils.
- Les principes de codage et de détection ne font appel ni à une différenciation des propriétés magnétiques des fils, ni à un choix de leur longueur, dès lors que cette longueur est supérieure à une valeur minimum, de l'ordre de 5 millimètres. Le système reste donc particulièrement simple, tant en ce qui concerne la structure du marquage lui-même, que pour ce qui est de la détection.
- Tous les fils parallèles étant identiques (en diamètre, longueur, composition, propriétés magnétiques, coercivité), on évite le risque d'erreurs lors de la manipulation des bobines de fils, pour la fabrication des marquages magnétiques.
- Dans la mesure où la longueur des fils n'exerce pas d'influence, une interruption de ces fils (par exemple par un coup de "cutter") ne saurait neutraliser le système, qui continue de fournir alors une réponse bien identifiée.
- Les fils ferromagnétiques peuvent être noyés dans toute matière moulée ou façonnée, ou être inclus dans un support textile, ce qui rend le marquage encore plus discret, et incorporable directement dans un produit ou objet.
- La souplesse des fils, et le cas échéant de leur support, autorise toute configuration d'étiquette, notamment pour former une étiquette magnétiquement codée à appliquer sur une surface cylindrique, telle que le fût d'une bouteille.
- Les propriétés magnétiques ici exploitées des fils sont très peu sensibles aux variations de température, dans une large plage (de -50° C à + 80° C par exemple), contrairement aux circuits magnétiques résonants de type LC sérigraphiés sur des étiquettes magnétiques interrogeables en haute fréquence, dans lesquels la capacité, donc la fréquence de résonance, varie sensiblement avec la température, compte tenu de la variation thermique de la permittivité du délectrique utilisé.
- Les fils étant constitués en un alliage magnétique amorphe ultra-doux, ceux-ci possèdent une faible coercivité qui permet de faire appel à des têtes de détecteurs de proximité de très faible champ rayonné, donc à très faible consommation de puissance, ce qui augmente l'autonomie des détecteurs portables.
- La détection de présence ou d'absence des fils, intervenant comme des antennes secondaires, s'effectue par une analyse des harmoniques générés par ces fils lors de leur approche de la saturation magnétique. Ainsi,la disposition géométrique des fils parallèles, et le codage qu'elle autorise, se prêtent bien à une analyse de la réponse par traitement du signal, avec mise en oeuvre de logiciels de traitement pouvant tolérer un certain degré d'erreur dans la calibration des écartements entre fils, ce qui facilite grandement la conception des machines réalisant la pose des fils.
- Le codage étant basé sur des fils à propriétés magnétiques douces, il ne peut être détruit, altéré ou effacé par un champ magnétique parasite, créé volontairement ou fortuitement, et de forte intensité, ceci contrairement à beaucoup de systèmes de codage magnétique existants basés sur des éléments magnétiquement "durs", tels que les cartes bancaires, les cartes à bande magnétique, ou les étiquettes à deux couches magnétiques (l'une dure et l'autre douce).
- Le faible diamètre des fils interdit sa détection par les antennes de surveillance électronique d'articles (dites antennes EAS).
- La réponse de chaque fil est indépendante de l'intensité du champ d'excitation délivré par le détecteur (à condition d'avoir la valeur d'intensité minimale pour saturer les fils), et cette réponse est donc toujours la même, ce qui facilite l'ajustement de l'intensité de la bobine d'excitation.
- Le principe de fils parallèles permet une fabrication aisée des marquages magnétiques en question, en continu ou en semi-continu, avec tronçonnage à la longueur désirée.

Dans la zone de lecture, l'espacement entre les positions possibles de fils est de préférence égal au minimum à 2 millimètres, un tel "pas" minimum étant nécessaire pour distinguer les fils lors de la détection, en évitant que plusieurs fils puissent se trouver simultanément à l'intérieur de la zone d'intensité critique d'excitation, ou que ces fils aient une influence les uns sur les autres. Le "pas" est choisi en fonction des dimensions des étiquettes et du nombre de fils, ce "pas" pouvant atteindre plusieurs millimètres. La largeur utile des étiquettes (dimension transversale aux fils) peut être comprise entre quelques millimètres et plusieurs centimètres, une telle dimension autorisant l'utilisation d'un code binaire à plusieurs dizaines de bits, offrant ainsi de nombreuses combinaisons.

Dans la conception la plus simple du codage, l'absence de fil dans une position donnée correspond à la valeur ZERO, et la présence d'un fil dans la position considérée correspond à la valeur UN.

L'invention a aussi pour objet un procédé industriel pour la fabrication du marquage magnétique précédemment défini, dans le cas où ce marquage est constitué par une feuille-support en matière adhésive, qui fixe les fils à propriétés ferromagnétiques dans leurs positions préétablies, cette feuille-support étant à recouvrir par une feuille protectrice.

Ce procédé consiste, essentiellement, à dérouler une bobine de complexe adhésif vierge, constitué d'une feuille-support en matière adhésivée et d'une feuille protectrice, recouvrant initialement la face adhésivée, à effectuer une opération de délaminage de ce complexe adhésif, consistant à séparer la feuille-support adhésivée de la feuille protectrice, tout en faisant avancer ces deux feuilles, à déposer des fils à propriétés ferromagnétiques ultra-douces sur la feuille-support adhésivée, dans le sens longitudinal de défilement de cette feuille, en positionnant transversalement les fils de manière précise en correspondance avec le code retenu pour le marquage, puis à effectuer une opération de relaminage, consistant à ramener la feuille protectrice sur la feuille-support adhésivée, désormais garnie des fils, et enfin à réenrouler le complexe adhésif reconstitué et incorporant les fils. On obtient ainsi une bobine de complexe adhésif, incorporant les fils à propriétés ferromagnétiques, répartis de la manière désirée. La bobine finalement obtenue peut alors être utilisée comme n'importe quelle autre bobine de complexe adhésif destinée à des opérations d'impression et de découpe, pour l'obtention de supports adhésifs séparés qui, dans le cas présent, seront par exemple des étiquettes magnétiquement codées avec fils incorporés, ou des produits façonnés au format de feuilles quelconques.

Enfin, l'invention a pour objet une machine spécialement destinée à la mise en oeuvre du procédé défini ci-dessus, donc une machine pour la fabrication du marquage magnétique, toujours dans le cas où celui-ci est constitué par une feuille-support en matière adhésivée, qui fixe les fils à propriétés ferromagnétiques dans leurs positions préétablies, cette feuille-support étant recouverte d'une feuille protectrice.

La machine en question comprend essentiellement, en combinaison et d'amont en aval :
- des moyens de support et de déroulage d'une bobine de complexe adhésif vierge, constitué d'une feuille-support en matière adhésivée et d'une feuille protectrice recouvrant initialement la face adhésivée ;
- des moyens de délaminage, assurant la séparation de la feuille-support adhésivée et de la feuille protectrice ;
- des moyens d'amenée et de dépose de fils à propriétés ferromagnétiques ultra-douces sur la feuille adhésivée, incluant des moyens pour le positionnement transversal de ces fils en correspondance avec le code retenu pour le marquage ;
- des moyens de relaminage, assurant la réunion de la feuille protectrice et de la feuille-support en matière adhésivée, garnie des fils ; et
- des moyens d'entraînement et d'enroulement du complexe adhésif reconstitué et incorporant les fils.

Avantageusement, les moyens d'amenée et de dépose de fils à propriétés ferromagnétiques comprennent, eux-mêmes :
- un support mobile verticalement, pour une pluralité de bobines de fil à propriétés ferromagnétiques ;
- des moyens pour l'accrochage initial et la traction des extrémités des fils issus de ces bobines ; et
- entre lesdites bobines de fil et ces moyens d'accrochage et de traction, un dispositif de positionnement transversal des fils.

Ainsi, la machine est équipée pour initier le processus de dépose des fils, par accrochage et traction des extrémités de ces fils, le support des bobines étant alors placé en position haute pour éviter un collage intempestif des fils sur la surface adhésivée, spécialement lors du positionnement transversal de ces fils pour réaliser le code souhaité. Ensuite, le support des bobines est abaissé, de sorte que les fils viennent tangenter la matière adhésive, et commencent à se fixer sur celle-ci. On notera qu'une fois fixés, les fils sont entraînés en avant avec la feuille-support, ce qui rend superflus tous moyens spécifiques de déroulage des bobines de fils ou de traction des fils.

De préférence, la machine est encore équipée, dans sa partie aval, de moyens de contrôle de la présence et du positionnement correct des fils posés, ces moyens pouvant intervenir en "lisant" le code formé par les fils, ceci d'une manière analogue à la "lecture" du même code par un dispositif de détection.

Dans le cas le plus simple, si ces derniers moyens constatent l'absence anormale d'un fil, généralement causée par la "casse" de ce fil, la machine doit être arrêtée en vue d'une remise en état manuelle.

Toutefois, dans une forme de réalisation perfectionnée de la machine, celle-ci comprend encore, intercalé entre les moyens précités d'amenée et de dépose des fils et les moyens de relaminage, au moins un module additionnel de pose d'un fil, ce qui permet de pallier automatiquement, et de façon quasi-instantanée, à la "casse" d'un fil, constatée par les moyens de contrôle de la présence et du positionnement correct des fils. Au cas où plusieurs modules analogues seraient ainsi successivement intercalés, la machine pourrait même pallier automatiquement à la "casse" de deux ou plusieurs fils. Avantageusement, cette machine est également équipée d'un dispositif de marquage, permettant de repérer la zone défectueuse, pour l'utilisation pratique ultérieure de la bobine.

Comme on le comprend aisément, le procédé et la machine, précédemment définis, permettent la fabrication automatique en continu, à cadence élevée et de manière fiable, de "matière première" codée permettant l'impression et la découpe d'un complexe adhésif en vue de l'obtention de marquages conformes à l'invention, tout en permettant de varier les codes de ces marquages par le positionnement transversal des fils.

De toute façon, l'invention sera mieux comprise à l'aide de la description qui suit, en référence au dessin schématique annexé qui représente, à titre d'exemples, diverses formes de réalisation et utilisations de ce système de marquage magnétique, qui illustre aussi le procédé de fabrication selon l'invention, et qui enfin montre des formes d'exécution de la machine pour la mise en oeuvre de ce procédé :
Figure 1 est une vue de face d'une étiquette magnétiquement codée conforme à l'invention ;
Figure 2 illustre une utilisation de cette étiquette magnétiquement codée ;
Figure 3 représente un autre marquage conforme à l'invention, en illustrant son utilisation ;
Figure 4 est un schéma illustrant le procédé de fabrication de supports adhésifs magnétiquement codés selon l'invention ;
Figure 5 est une vue de côté d'une machine de mise en oeuvre de ce procédé ;
Figure 6 est une vue en plan par dessus de la machine de figure 5 ;
Figures 7, 8, 9 et 10 sont des schémas partiels de cette machine, en vue de côté, illustrant des phases successives de son fonctionnement ;
Figure 11 est un autre schéma partiel de la même machine, en vue en plan par-dessus;
Figure 12 est une vue de côté d'une variante de cette machine.

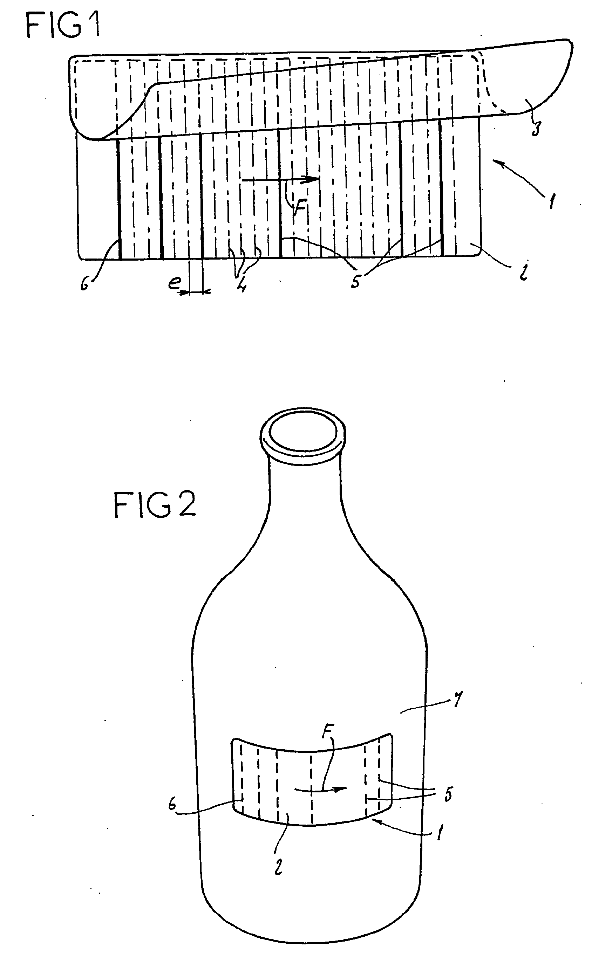

La figure 1 montre un marquage magnétique, réalisé sous la forme d'une étiquette magnétiquement codée 1. Celle-ci comprend une feuille-support 2 possédant une face adhésivée, et une feuille de protection 3, du genre papier siliconé, initialement appliquée sur la face adhésivée de la feuille-support 2.

Sur l'étiquette magnétiquement codée 1 sont pré-définies des positions parallèles 4, séparés par un écartement ou "pas" constant "e". Dans certaines de ces positions 4 préétablies sont posés des fils parallèles 5 à propriétés ferromagnétiques ultra-douces. L'absence ou la présence des fils 5, dans les différentes positions 4 possibles, définit un code binaire détectable, propre à chaque étiquette 1.

Le marquage comprend encore avantageusement, vers une extrémité de l'étiquette 1, un premier fil 6 à propriétés ferromagnétiques, permettant le repérage du début de la "zone de lecture" dans laquelle sont positionnés les autres fils 5.

Tous les fils 5 et 6 sont fixés, dans leurs positions préétablies, par simple adhésion sur la face adhésivée de la feuille-support 2. La feuille de protection 3 recouvre initialement ces fils 5 et 6.

Après retrait de la feuille de protection 3, l'étiquette magnétiquement codée 1 peut être fixée par collage sur un produit, un article ou un objet, tel qu'une bouteille 7 comme illustré sur la figure 2. Le déplacement d'un détecteur approprié (non représenté), selon une direction F transversale aux fils 5 et 6, permet de "lire" le code binaire formé par ces fils.

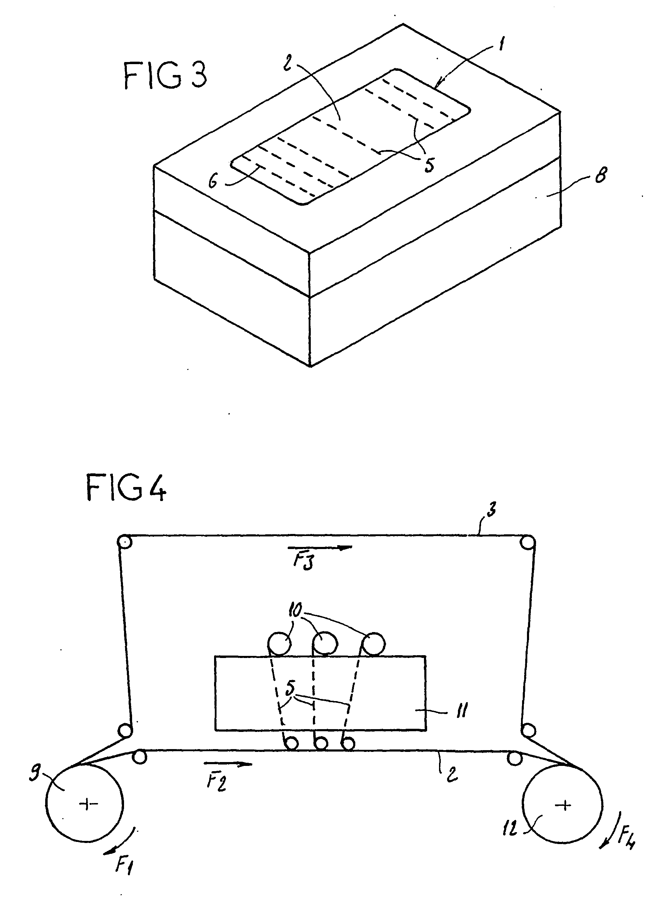

Dans l'exemple d'utilisation de la figure 2, la souplesse de l'étiquette magnétiquement codée 1 permet son enroulement autour du fût de la bouteille 7. Bien entendu, comme l'illustre la figure 3, l'étiquette magnétique ment codée 1 ou autre marquage selon l'invention peut aussi conserver une configuration plane, notamment en correspondance avec une face plane d'un objet 8 à identifier ou à authentifier.

En se référant toujours à la figure 3, on notera que le marquage 1 avec fils 5, 6 à propriétés ferromagnétiques peut être noyé dans un support 2, incorporé lui-même à l'objet 8, les fils 5, 6 devant toutefois être noyés à faible profondeur, de manière à toujours permettre leur détection individuelle et la "lecture" du code formé par l'ensemble de ces fils.

La figure 4 illustre le procédé de fabrication, en continu, d'un complexe adhésif codé, servant de base à la réalisation d'étiquettes magnétiquement codées telles que celle représentée sur la figure 1.

Le point de départ du procédé est une bobine 9 de complexe adhésif vierge, constitué d'une feuille-support 2 possédant une face adhésivée, et d'une feuille de protection 3 initialement appliqué sur la face adhésivée de la feuille support 2.

La bobine 9 est déroulée (flèche F1), et le complexe adhésif qui le constitue est délaminé, c'est-à-dire que la feuille-support adhésivée 2 est séparée de la feuille protectrice 3. Les deux feuilles 2 et 3 avancent alors selon des trajets distincts (flèches F2 et F3), en étant convenablement guidées.

Sur le trajet de la feuille-support adhésivée 2, qui se situe au-dessous du trajet de la feuille protectrice 3, il est procédé à la pose des fils 5 à propriétés ferromagnétiques, issus de bobines de fil 10 respectives, le dispositif de pose de ces fils 5 étant symbolisé en 11. Les fils 5 sont ainsi posés parallèlement les uns aux autres, dans la direction longitudinale de défilement F2 de la feuille-support 2, et avec un positionnement transversal bien précis, correspondant au code retenu pour le marquage à réaliser.

Ensuite, il est procédé au relaminage, c'est-à-dire que la feuille protectrice 3 est ramenée sur la feuille-support 2, désormais garnie de fils 5. La réunion de deux feuilles 2 et 3 "emprisonne" les fils 5 entre ces deux feuilles 2 et 3, et l'on obtient ainsi un complexe adhésif reconstitué, incorporant les fils 5.

Enfin, le complexe adhésif reconstitué est réenroulé, comme indiqué par la flèche F4, pour former une nouvelle bobine 12. Cette dernière peut ultérieurement être reprise, pour l'impression du complexe et pour sa séparation en marquages individuels, tels que l'étiquette montrée sur la figure 1.

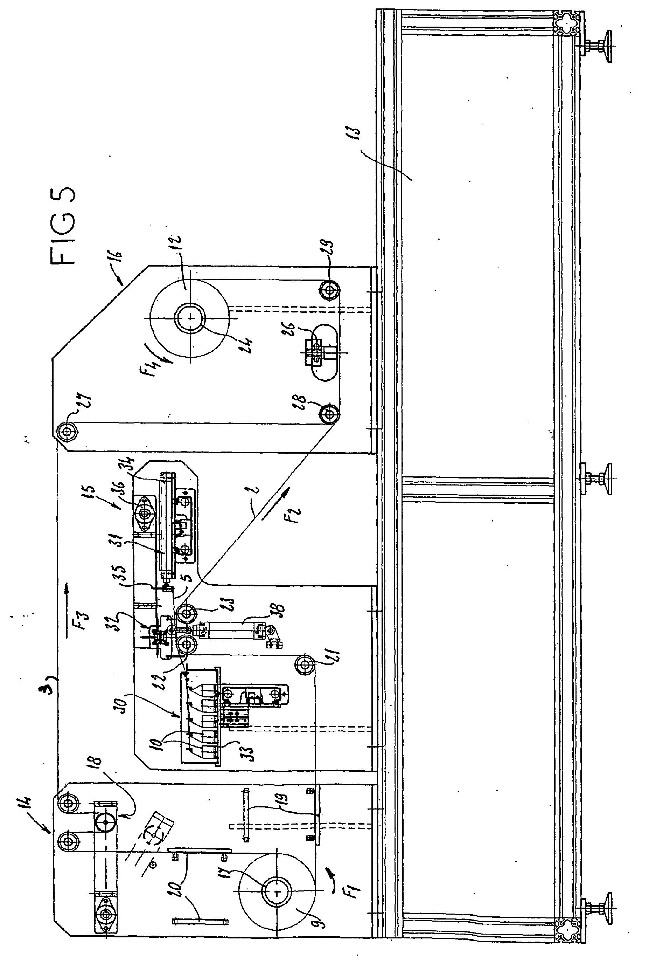

Les figures 5 et suivantes représentent, plus en détail, une machine automatique mettant en oeuvre le procédé schématisé sur la figure 4.

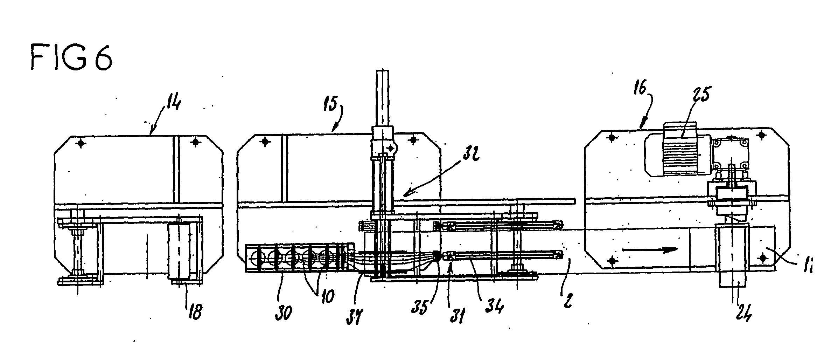

En se référant plus particulièrement aux figures 5 et 6, la machine comprend, au-dessus d'un bâti allongé 13 et d'amont en aval : un sous-ensemble 14 de déroulage et de délaminage, un module 15 de dépose des fils, et un sous-ensemble 16 de relaminage et de réenroulement.

Le sous-ensemble amont 14 comporte lui-même un arbre-support horizontal 17, pour une bobine 9 de complexe adhésif vierge, à dérouler suivant la flèche F1. En quittant la bobine 9, ce complexe adhésif se sépare en la feuille-support 2, dirigée horizontalement, et la feuille de protection 3, dirigée d'abord verticalement. La feuille de protection 3 passe sur un dispositif de tension 18, placé dans la partie supérieure du sous-ensemble amont 14. Ce sous-ensemble 14 comprend encore des paires de plaques 19 et 20, utilisées pour faciliter le raccordement des feuilles 2 et 3 lors d'un changement de la bobine 9.

Le sous-ensemble aval 16 comporte divers rouleaux 27 28 et 29 d'axes horizontaux, qui guident les deux feuilles 2 et 3 de manière à les réunir. Ce sous-ensemble aval 16 comporte aussi un arbre-support horizontal 24, recevant une bobine 12 sur laquelle est réenroulé le complexe adhésif reconstitué et codé. L'arbre-support 24 est accouplé à un moteur électrique 25, qui est prévu pour entraîner cet arbre-support 24, donc la bobine 12, en rotation continue. Entre les deux derniers rouleaux 28 et 29, le sous-ensemble aval 16 comporte encore un détecteur 26 de la présence et du positionnement correct des fils posés.

Le module 15 de dépose des fils, intercalé entre le sous-ensemble amont 14 et le sous-ensemble aval 16, comprend lui-même :
- des rouleaux 21, 22 et 23 d'axes horizontaux, pour le guidage de la feuille-support adhésivée 2 ;
- un support amovible 30, du genre "cassette", pour les bobines de fil 10, le support 30 étant monté mobile verticalement (flèche F5), au moyen d'un vérin ;
- un sous-ensemble 31 d'accrochage initial et de traction des fils 5 ; et
- entre la "cassette" 30 et le sous-ensemble 31, au-dessus des rouleaux 22 et 23, un dispositif 32 de positionnement transversal des fils 5.

La cassette 30 est portée par un chariot 33, lui-même mobile en direction transversale.

Le sous-ensemble 31 comporte un vérin 34, orienté longitudinalement, dont la tige dirigée vers l'amont porte des organes 35 d'accrochage des extrémités des fils 5. Ce sous-ensemble 31 est lui-même déplaçable transversalement, au moyen d'un autre vérin 36.

Enfin, le dispositif 32 comprend un peigne 37, dont les différentes dents sont déplaçables transversalement. Un vérin 38 est prévu pour commander la montée et la descente du peigne 37.

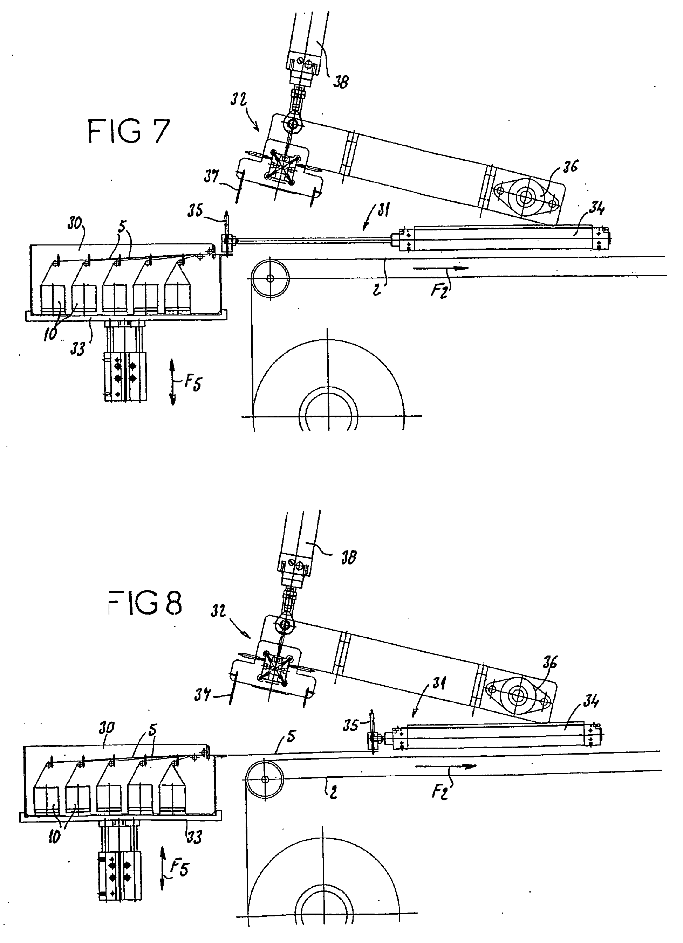

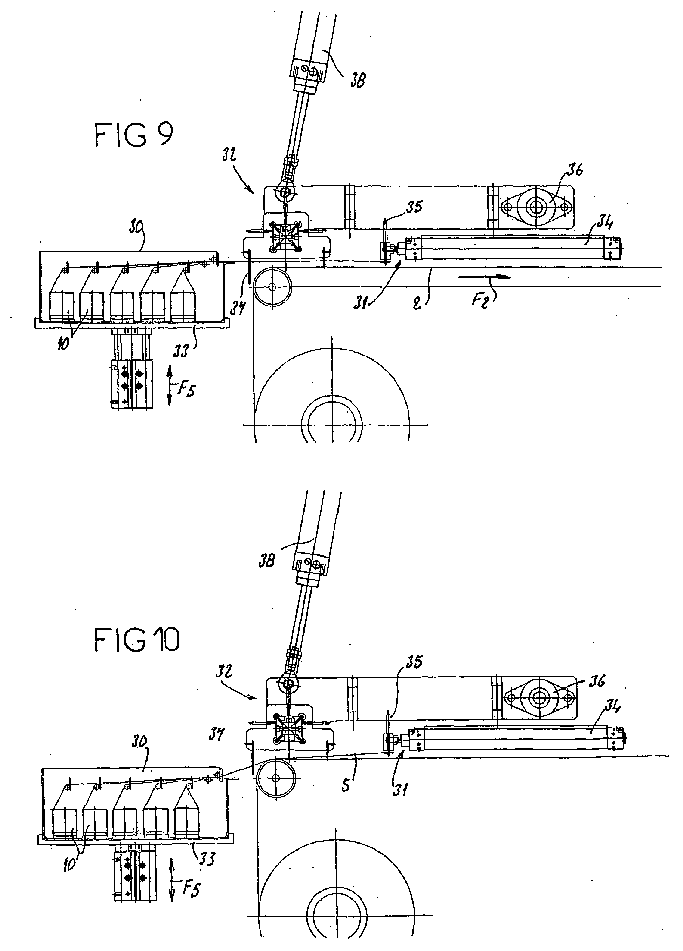

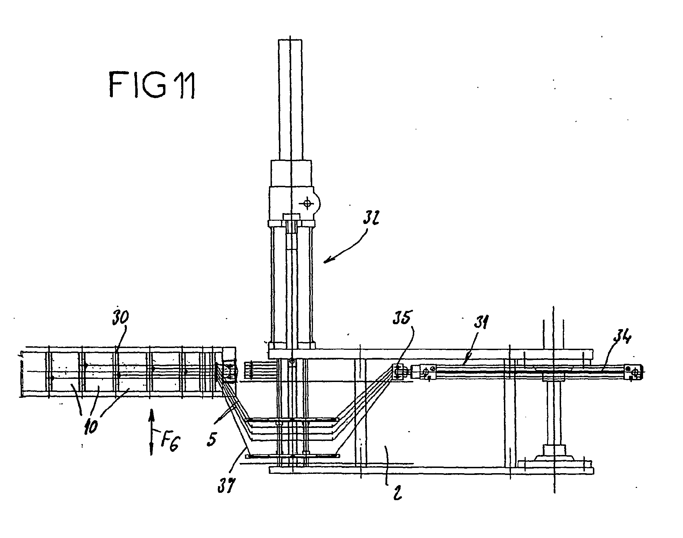

Les figures 7 à 10 illustrent les phases successives de fonctionnement de la machine, au démarrage de celle-ci c'est-à-dire après l'introduction d'une nouvelle "cassette" 30 :
- Première phase (figure 7) :
   La "cassette" 30 étant en position haute, les extrémités des fils 5, issus des différentes bobines 10, sont accrochées sur les organes 35, approchés de la "cassette" 30 par sortie de la tige du vérin 34. Le peigne 37 se trouve alors escamoté vers le haut.
- Deuxième phase (figure 8) :
   Le vérin 34 est rétracté, en tirant alors en avant les fils 5, dont les portions déroulées sont maintenues au-dessus de la feuille-support 2, afin d'éviter d'être au conctact avec la surface adhésive. A ce stade, les fils 5 restent équidistants.
- Troisième phase (figure 9) :
   Le peigne 37 est abaissé, par actionnement du vérin 38. Les dents de ce peigne 37 s'intercalent alors entre les fils 5 et chaque dent pousse latéralement un fil, de manière à obtenir les positions et écartements souhaités de tous les fils 5.
- Quatrième phase (figure 10) :
   La "cassette" 30 est abaissée, de telle sorte que les fils 5, précédemment positionnés, entrent en contact avec la face adhésivée de la feuille-support 2. La "cassette" 30 est alors réalignée avec la feuille-support 2, par déplacement transversal - voir aussi la figure 11 (flèche F6).
- Cinquième phase (non illustrée) :
   On coupe les extrémités des fils 5, saisies précédemment par les organes 35, au moyen d'un dispositif automatique de coupe (non représenté).
- Sixième phase :
   Le moteur 25 est mis en marche, de manière à entraîner en rotation l'arbre-support 24, donc à commencer à réenrouler le complexe adhésif codé sur la bobine 12 (flèche F4). Les deux feuilles 2 et 3 sont ainsi entraînées en avant, de façon synchronisée (flèches F2 et F3), la feuille-support adhésivée 2 entraînant avec elle les fils 5 déposés, en les déroulant de leurs bobines 10 respectives.

Au cours de ce processus, le détecteur 26 contrôle en permanence la présence et le positionnement correct des fils 5 posés, et il peut notamment commander l'arrêt de la machine en cas de "casse" d'un fil 5, ou de mauvaise lecture.

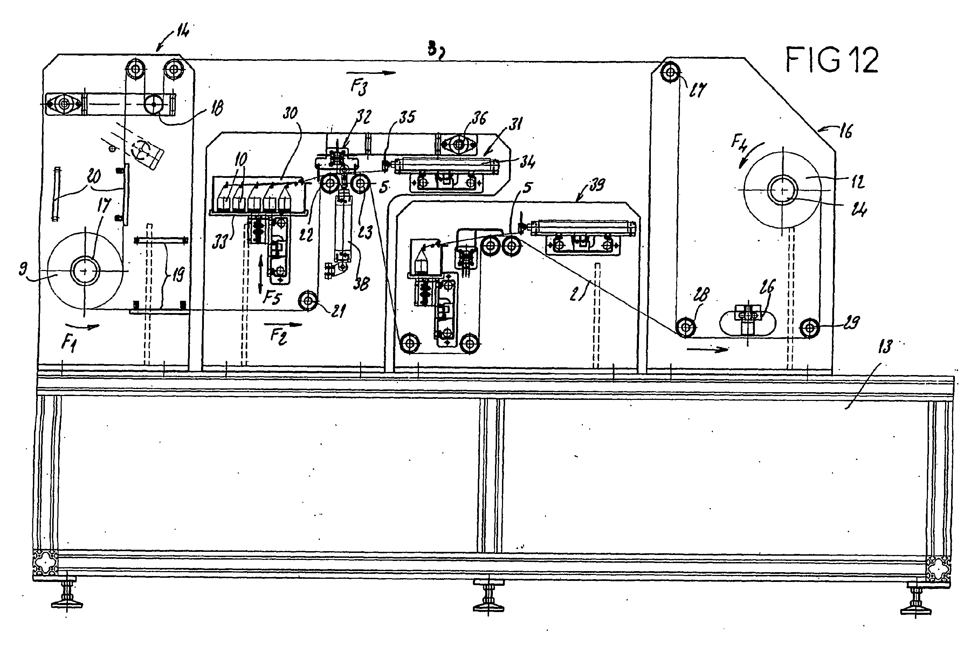

La figure 12 montre une variante de la machine précédemment décrite, les sous-ensembles et éléments correspondant à ceux déjà décrits y étant désignés par les repères.

Dans cette variante, entre le module 15 de dépose des fils 5 et le sous-ensemble aval 16 de relaminage et de réenroulement, il est encore prévu un module 39 intercalé, qui est conçu selon le même principe que le module 15 mais agencé pour la pose d'un seul fil 5, issu d'une unique bobine 40. En combinaison avec le détecteur 26, le module additionnel 39 permet, en cas de constatation de l'absence d'un fil, de poser un fil 5 de remplacement sur la feuille-support 2, dans la position exacte du fil manquant.

Comme il va de soi, l'invention ne se limite pas aux seuls modes d'exécution décrits ci-dessus, à titre d'exemples ; elle en embrasse, au contraire, toutes les variantes de réalisation et d'application, quels que soient notamment le nombre des fils, ou la nature de leur support, ou encore les détails constructifs des machines. Ainsi, il est possible d'incorporer au marquage, selon le même procédé que les autres fils, au moins un fil non détectable, par exemple non magnétique, constituant un "leurre". Dans le même ordre d'idées, par référence à la variante de la figure 12, les modules additionnels intercalés peuvent être multipliés, pour permettre le remplacement de deux ou plusieurs fils cassés.

## Revendications

1. Marquage magnétique comprenant, posés sur ou dans un support (2), des fils (5, 6) à propriétés ferromagnétiques ultradouces, en particulier des filaments ferromagnétiques amorphes gainés de verre et réalisés dans un alliage magnétique amorphe composé de cobalt ou de fer, de nickel, de bore, de silicium et de carbone, l'âme métallique des filaments (5) possédant un diamètre de l'ordre d'une dizaine à quelques dizaines de microns, l'épaisseur de la gaine de verre ne dépassant pas quelques microns, et le diamètre total des filaments ne dépassant pas 50 microns, ces fils étant disposés de manière à former un code binaire détectable, **caractérisé en ce que** les fils comprennent un premier fil (6) pour le repérage du début d'une zone de lecture, dans laquelle sont positionnés le ou les fils (5) définissant le code biniaire, fils qui est ou sont posés dans des positions parallèles préétablies (4) séparées par un intervalle constant (e) selon une trame préétablie, les fils (5) présents ou absents définissant le code binaire.

2. Marquage magnétique selon la revendication 1, **caractérisé en ce que** le support est du type bidimensionnel et constitué par une feuille de matière adhésivée (2), qui fixe les fils (5) à propriétés ferromagnétiques ultra-douces dans leurs positions (4) préétablies.

3. Marquage magnétique selon la revendication 2, **caractérisé en ce que** la feuille-support adhésivée (2) est recouverte, au moins dans son état initial, par une feuille protectrice (3), du genre papier siliconé, qui ainsi recouvre aussi les fils (5).

4. Marquage magnétique selon la revendication 2 ou 3, **caractérisé en ce que** la feuille-support (2) est une feuille transparente.

5. Marquage magnétique selon la revendication 1, **caractérisé en ce que** le support est de type tridimensionnel, auquel cas les fils (5) à propriétés ferromagnétiques sont noyés dans l'épaisseur de ce support, dans leurs positions (4) préétablies.

6. Marquage magnétique selon l'une quelconque des revendications 1 à 5, **caractérisé en ce que** dans la zone de lecture, l'espacement entre les positions possibles (4) de fils (5) est égal au minimum à 2 millimètres.

7. Marquage magnétique selon l'une quelconque des revendications 1 à 6, **caractérisé en ce qu'**est incorporé au marquage (1) au moins un fil non détectable, par exemple non magnétique, constituant un "leurre".

8. Procédé pour la fabrication d'un marquage magnétique, plus particulièrement d'un marquage (1) constitué par une feuille-support (2) en matière adhésivée, qui fixe des fils (5) à propriétés ferromagnétiques dans leurs positions préétablies (4), cette feuille-support (2) étant à recouvrir par une feuille protectrice (3), **caractérisé en ce qu'**il consiste à dérouler (F1) une bobine (9) de complexe adhésif vierge, constituée d'une feuille-support (2) en matière adhésivée et d'une feuille protectrice (3) recouvrant la face adhésivée, à effectuer une opération de délaminage de ce complexe adhésif, consistant à séparer la feuille-support adhésivée (2) de la feuille protectrice (3), tout en faisant avancer (F2, F3) ces deux feuilles (2, 3), à déposer des fils (5) à propriétés ferromagnétiques ultra-douces sur la feuille-support adhésivée (2) dans le sens longitudinal de défilement (F2) de cette feuille (2), en positionnant transversalement les fils (5) de manière précise en correspondance avec le code retenu pour le marquage (1), puis à effectuer une opération de relaminage, consistant à ramener la feuille protectrice (3) sur la feuille-support adhésivée (2) désormais garnie des fils (5), et enfin à réenrouler (F4,12) le complexe adhésif reconstitué et incorporant les fils (5).

9. Procédé selon la revendication 8, **caractérisé en ce que** la bobine (12) finalement obtenue est soumise à des opérations d'impression et de découpe, pour l'obtention de supports adhésifs séparés, par exemple des étiquettes magnétiquement codées (1) avec des fils (5) incorporés.

10. Machine destinée à la mise en oeuvre du procédé selon la revendication 8 ou 9, pour la fabrication du marquage magnétique (1) constitué par une feuille-support (2) en matière adhésivée qui fixe les fils (5) à propriétés ferromagnétiques dans leurs positions préétablies (4), cette feuille-support (2) étant recouverte d'une feuille protectrice (3), **caractérisée en ce qu'**elle comprend, en combinaison (26) et d'amont en aval :
- des moyens (14, 17) de support et de déroulage d'une bobine (9) de complexe adhésif vierge, constitué d'une feuille-support (2) en matière adhésivée et d'une feuille protectrice (3);
- des moyens (15) d'amenée et de dépose de fils (5) à propriétés ferromagnétiques ultra-douces sur la feuille adhésivée, incluant des moyens (37, 38) pour le positionnement transversal de ces fils (5) en correspondance avec le code retenu pour le marquage (1);
- des moyens (16) de relaminage, assurant la réunion de la feuille protectrice (3) et de la feuille-support (2) en matière adhésivée, garnie des fils (5); et
- des moyens (24, 25) d'entraînement et d'enroulement du complexe adhésif reconstitué et incorporant les fils (5).

11. Machine selon la revendication 10, **caractérisée en ce que** les moyens (15) d'amenée et de dépose de fils (5) à propriétés magnétiques comprennent :
- un support (30) mobile verticalement, pour une pluralité de bobines (10) de fils (5) à propriétés ferromagnétiques;
- des moyens (31) pour l'accrochage initial et la traction des extrémités des fils (5) issus de ces bobines (10); et
- entre lesdites bobines (10) de fil (5) et ces moyens d'accrochage et de traction (31), un dispositif (32) de positionnement transversal des fils (5).

12. Machine selon la revendication 11, **caractérisée en ce que** les moyens (31) pour l'accrochage initial et la traction des extrémités des fils (5) issus des bobines (10) comportent un vérin (34), orienté longitudinalement, dont la tige dirigée vers l'avant porte des organes (35) d'accrochage des extrémités des fils (5).

13. Machine selon la revendication 11 ou 12, **caractérisée en ce que** le dispositif (32) de positionnement transversal des fils (5) comprend un peigne (37), dont les différentes dents sont déplaçables transversalement, un vérin (38) étant prévu pour commander la montée et la descente du peigne (37).

14. Machine selon l'une quelconque des revendications 11 à 13, **caractérisée en ce qu'**elle est encore équipée, dans sa partie aval, de moyens de contrôle (26) de la présence et du positionnement correct des fils (5) posés, ces moyens (26) pouvant intervenir en "lisant" le code formé par les fils (5).

15. Machine selon la revendication 14, **caractérisée en ce qu'**elle comprend, intercalé entre les moyens (15) d'amenée et de dépose des fils (5) et les moyens (16) de relaminage, au moins un module additionnel (39) de pose d'un fil (5), permettant de pallier automatiquement à la "casse" d'un fil (5), constatée par les moyens (26) de contrôle de la présence et du positionnement correct des fils (5).

## Claims

1. A magnetic marking system comprising, laid on or in a carrier (2), wires (5, 6) having ultrasoft ferromagnetic properties, in particular glass-clad ferromagnetic filaments made of an amorphous magnetic alloy composed of cobalt or of iron, of nickel, of boron, of silicon and of carbon, the metal core of the filaments (5) possessing a diameter of the order of some ten to a few tens of microns, the thickness of the glass cladding not exceeding a few microns, said wires being arranged so as to form a detectable binary code, **characterized in that** the wires comprise a first wire (6) for tagging the start of a reading zone, in which are positioned the wire or wires (5) defining the binary code, said wire or wires being laid in pre-established parallel positions (4) separated by a constant gap (e) according to a pre-established frame, the present or absent wires (5) defining the binary code.

2. A magnetic marking system as claimed in claim 1, **characterized in that** the carrier is of the two-dimensional type and constituted by a sheet of adhesive-coated material (2), which fixes the wires (5) having ultrasoft ferromagnetic properties in their pre-established positions (4).

3. The magnetic marking system as claimed in claim 2, **characterized in that** the adhesive-coated carrier sheet (2) is covered, at least in its initial state, with a protective sheet (3), of the silicone-coated paper kind, which thus also covers the wires (5).

4. The magnetic marking system as claimed in claim 2 or 3, **characterized in that** the carrier sheet (2) is a transparent sheet.

5. The magnetic marking system as claimed in claim 1, **characterized in that** the carrier is of the three-dimensional type, in which case the wires (5) having ferromagnetic properties are embedded in the thickness of this carrier, in their pre-established positions (4).

6. The magnetic marking system as claimed in any one of claims 1 to 5, **characterized in that** in the reading zone, the spacing between the possible positions (4) of wires (5) is equal at the minimum to 2 millimeters.

7. The magnetic marking system as claimed in any one of claims 1 to 6, **characterized in that** at least one nondetectable wire, for example a nonmagnetic wire, constituting a "decoy" is incorporated into the marking(1).

8. A method for the production of a magnetic marking, more particularly of a marking (1) constituted by a carrier sheet (2) made of adhesive-coated material, which fixes wires (5) having ferromagnetic properties in their pre-established positions (4), this carrier sheet (2) having to be covered with a protective sheet (3),
**characterized in that** it consists in unwinding (F1) a coil (9) of virgin adhesive complex, which coil consists of a carrier sheet (2) made of adhesive-coated material and of a protective sheet (3) covering the adhesive-coated face, in performing an operation of relamination of this adhesive complex, consisting in separating the adhesive-coated carrier sheet (2) from the protective sheet (3), while advancing (F2, F3) these two sheets (2, 3), in depositing wires (5) having ultrasoft ferromagnetic properties on the adhesive-coated carrier sheet (2) in the longitudinal direction of travel (F2) of this sheet (2), while positioning the wires (5) transversely in a precise manner in correspondence with the code adopted for the marking (1), then in performing a relamination operation, consisting in returning the protective sheet (3) onto the adhesive-coated carrier sheet (2) henceforth furnished with the wires (5), and finally in rewinding (F4,12) the reconstituted adhesive complex incorporating the wires (5).

9. The method as claimed in claim 8, **characterized in that** the coil (12) finally obtained is subjected to printing and cutting operations, so as to obtain separate adhesive carriers, for example magnetically coded labels (1) with incorporated wires (5).

10. A machine intended for the implementation of the method as claimed in claim 8 or 9, for the production of the magnetic marking (1) constituted by a carrier sheet (2) made of adhesive-coated material which fixes the wires (5) having ferromagnetic properties in their pre-established positions (4), this carrier sheet (2) being covered with a protective sheet (3),**characterized in that** it comprises, in combination (26) and from upstream to downstream:
- means (14, 17) for carrying and unwinding a coil (9) of virgin adhesive complex, consisting of a carrier sheet (2) made of adhesive-coated material and of a protective sheet (3);
- means (15) of bringing and depositing wires (5) having ultrasoft ferromagnetic properties onto the adhesive-coated sheet, including means (37, 38) for the transverse positioning of these wires (5) in correspondence with the code adopted for the marking (1) ;
- means (16) of relamination, ensuring the rejoining of the protective sheet (3) and of the carrier sheet (2) made of adhesive-coated material, furnished with the wires (5); and
- means (24, 25) of driving and winding up the reconstituted adhesive complex incorporating the wires (5).

11. The machine as claimed in claim 10, **characterized in that** the means (15) of bringing and depositing wires (5) having magnetic properties comprise:
- a vertically mobile carrier (30), for a plurality of coils (10) of wires (5) having ferromagnetic properties;
- means (31) for the initial fastening and the pulling of the ends of the wires (5) emanating from these coils (10); and
- between said coils (10) of wire (5) and these means of fastening and of pulling (31), a device (32) for transverse positioning of the wires (5).

12. The machine as claimed in claim 11, **characterized in that** the means (31) for the initial fastening and the pulling of the ends of the wires (5) emanating from the coils (10) comprise a ram (34), oriented longitudinally, whose frontward directed rod bears members (35) for fastening the ends of the wires (5).

13. The machine as claimed in claim 11 or 12, **characterized in that** the device (13) for transverse positioning of the wires (5) comprises a comb (37), whose various teeth are transversely displaceable, a ram (38) being provided for controlling the raising and the lowering of the comb (37).

14. The machine as claimed in any one of claims 11 to 13, **characterized in that** it is furthermore equipped, in its downstream part, with means (26) for checking the presence and the correct positioning of the laid wires (5), these means (26) being able to intervene by "reading" the code formed by the wires (5).

15. The machine as claimed in claim 14, **characterized in that** it comprises, interposed between the means (15) of bringing and depositing the wires (5) and the means (16) of relamination, at least one additional module (39) for laying a wire (5), making it possible to automatically cope with the "breakage" of a wire (5), noted by the means (26) for checking the presence and the correct positioning of the wires (5).

## Patentansprüche

1. Magnetische Markierung, die auf oder in einem Träger (2) angeordnet Drähte (5, 6) mit ultraweichen ferromagnetischen Eigenschaften aufweist, insbesondere amorphe ferromagnetische Fäden, die mit Glas umhüllt und aus einer amorphen magnetischen Legierung hergestellt sind, die aus Kobalt oder Eisen, Nickel, Bor, Silicium und Kohlenstoff zusammengesetzt ist, wobei der metallische Kern der Fäden (5) einen Durchmesser in der Größenordnung von etwa zehn bis zu einigen zehn Mikron besitzt, wobei die Dicke der Glashülle einige Mikron nicht überschreitet, und der Gesamtdurchmesser der Fäden 50 Mikron nicht überschreitet, wobei diese Drähte so angeordnet sind, dass sie einen erfassbaren Binärcode bilden, **dadurch gekennzeichnet, dass** die Drähte einen ersten Draht (6) zur Markierung des Beginns einer Lesezone aufweisen, in der der oder die den Binärcode definierende(n) Draht oder Drähte (5) positioniert ist oder sind, Draht oder Drähte, der oder die in vorab festgelegten parallelen Positionen (4) angeordnet ist (sind), die durch einen konstanten Zwischenraum (e) gemäß einem vorab festgelegten Raster getrennt werden, wobei die vorhandenen oder abwesenden Drähte (5) den Binärcode definieren.

2. Magnetische Markierung nach Anspruch 1, **dadurch gekennzeichnet, dass** der Träger vom zweidimensionalen Typ ist und aus einer Folie aus klebfähig gemachtem Stoff (2) besteht, der die Drähte (5) mit ultraweichen ferromagnetischen Eigenschaften in ihren vorab bestimmten Positionen (4) fixiert.

3. Magnetische Markierung nach Anspruch 2, **dadurch gekennzeichnet, dass** die klebfähig gemachte Trägerfolie (2) zumindest in ihrem Ursprungszustand mit einer Schutzfolie (3) von der Art silikonbeschichtetes Papier bedeckt ist, die so auch die Drähte (5) bedeckt.

4. Magnetische Markierung nach Anspruch 2 oder 3, **dadurch gekennzeichnet, dass** die Trägerfolie (2) eine transparente Folie ist.

5. Magnetische Markierung nach Anspruch 1, **dadurch gekennzeichnet, dass** der Träger vom dreidimensionalen Typ ist, in welchem Fall die Drähte (5) mit ferromagnetischen Eigenschaften in ihren vorab festgelegten Positionen (4) in die Dicke dieses Trägers eingebettet werden.

6. Magnetische Markierung nach einem der Ansprüche 1 bis 5, **dadurch gekennzeichnet, dass** in der Lesezone der Abstand zwischen den möglichen Positionen (4) der Drähte (5) mindestens gleich 2 Millimeter ist.

7. Magnetische Markierung nach einem der Ansprüche 1 bis 6, **dadurch gekennzeichnet, dass** in die Markierung (1) mindestens ein nicht erfassbarer Draht, zum Beispiel ein nicht-magnetischer Draht, eingefügt ist, der einen "Köder" bildet.

8. Verfahren zur Herstellung einer magnetischen Markierung, insbesondere einer Markierung (1), die aus einer Trägerfolie (2) aus klebfähig gemachtem Stoff besteht, der Drähte (5) mit ferromagnetischen Eigenschaften in ihren vorab festgelegten Positionen (4) fixiert, wobei diese Trägerfolie (2) mit einer Schutzfolie (3) zu bedecken ist, **dadurch gekennzeichnet, dass** es darin besteht, eine Spule (9) eines unbenutzten klebfähigen Komplexes abzurollen (F1), der aus einer Trägerfolie (2) aus klebfähig gemachtem Stoff und aus einer Schutzfolie (3) besteht, die die klebfähig gemachte Seite bedeckt, einen Vorgang des Entlaminierens dieses klebfähigen Komplexes durchzuführen, der darin besteht, die klebfähig gemachte Trägerfolie (2) von der Schutzfolie (3) zu trennen, wobei diese zwei Folien (2, 3) gleichzeitig vorwärtsbewegt werden (F2, F3), Drähte (5) mit ultraweichen ferromagnetischen Eigenschaften auf die klebfähig gemachte Trägerfolie (2) in der Längsdurchlaufrichtung (F2) dieser Folie (2) aufzubringen, indem die Drähte (5) entsprechend dem für die Markierung (1) gewählten Code präzise quer positioniert werden, dann einen Vorgang des erneuten Laminierens durchzuführen, der darin besteht, die Schutzfolie (3) wieder auf die jetzt mit den Drähten (5) bestückte klebfähig gemachte Trägerfolie (2) zurückzubringen, und schließlich den wiederhergestellten und die Drähte (5) enthaltenden klebfähigen Komplex wieder aufzurollen (F4, 12).

9. Verfahren nach Anspruch 8, **dadurch gekennzeichnet, dass** die schließlich erhaltene Spule (12) Vorgängen des Bedruckens und des Zerschneidens unterzogen wird, um getrennte klebfähig gemachte Träger zu erhalten, zum Beispiel magnetisch codierte Etiketten (1) mit integrierten Drähten (5).

10. Maschine, die zur Anwendung des Verfahrens nach Anspruch 8 oder 9 bestimmt ist, zur Herstellung der magnetischen Markierung (1), die aus einer Trägerfolie (2) aus klebfähig gemachtem Stoff besteht, der die Drähte (5) mit ferromagnetischen Eigenschaften in ihren vorab festgelegten Positionen (4) fixiert, wobei diese Trägerfolie (2) mit einer Schutzfolie (3) bedeckt ist, **dadurch gekennzeichnet, dass** sie in Kombination (26) und von vorne nach hinten aufweist:
- Mittel (14, 17) zum Halt und zum Abwickeln einer Spule (9) eines unbenutzten klebfähigen Komplexes bestehend aus einer Trägerfolie (2) aus klebfähig gemachtem Stoff und aus einer Schutzfolie (3);
- Zufuhr- und Aufbringmitteln (15) von Drähten (5) mit ultraweichen ferromagnetischen Eigenschaften auf die klebfähig gemachte Folie, die Mittel (37, 38) zur Positionierung dieser Drähte (5) in Querrichtung entsprechend dem für die Markierung (1) gewählten Code umfassen;
- Mittel (16) zum erneuten Laminieren, die die Wiedervereinigung der Schutzfolie (3) und der mit den Drähten (5) bestückten Trägerfolie (2) aus klebfähig gemachtem Stoff gewährleisten; und
- Mittel (24, 25) zum Antrieb und zum Aufwickeln des wiederhergestellten und die Drähte (5) enthaltenden klebfähigen Komplexes.

11. Maschine nach Anspruch 10, **dadurch gekennzeichnet, dass** die Zufuhr- und Aufbringmittel (15) von Drähten (5) mit magnetischen Eigenschaften aufweisen:
- einen senkrecht beweglichen Träger (30) für mehrere Spulen (10) von Drähten (5) mit ferromagnetischen Eigenschaften;
- Mittel (31) für die anfängliche Befestigung und für den Zug an den Enden der von diesen Spulen (10) stammenden Drähte (5); und
- zwischen den Spulen (10) von Draht (5) und diesen Befestigungs- und Zugmitteln (31), eine Vorrichtung (32) zur Querpositionierung der Drähte (5).

12. Maschine nach Anspruch 11, **dadurch gekennzeichnet, dass** die Mittel (31) zur anfänglichen Befestigung und zum Zug an den Enden der von den Spulen (10) stammenden Drähte (5) einen in Längsrichtung ausgerichteten Arbeitszylinder (34) aufweisen, dessen nach vorne gerichtete Stange Organe (35) zur Befestigung der Enden der Drähte (5) trägt.

13. Maschine nach Anspruch 11 oder 12, **dadurch gekennzeichnet, dass** die Vorrichtung (32) zur Querpositionierung der Drähte (5) einen Kamm (37) aufweist, dessen verschiedene Zinken quer verschiebbar sind, wobei ein Arbeitszylinder (38) vorgesehen ist, um das Aufsteigen und Absinken des Kamms (37) zu steuern.

14. Maschine nach einem der Ansprüche 11 bis 13, **dadurch gekennzeichnet, dass** sie weiter in ihrem hinteren Bereich mit Mitteln (26) zur Überwachung des Vorhandenseins und der korrekten Positionierung der verlegten Drähte (5) ausgestattet ist, wobei diese Mittel (26) eingreifen können, indem sie den von den Drähten (5) geformten Code "lesen".

15. Maschine nach Anspruch 14, **dadurch gekennzeichnet, dass** sie zwischen die Zufuhr- und Aufbringmittel (15) der Drähte (5) und die Mittel (16) zum erneuten Laminieren eingefügt mindestens ein zusätzliches Modul (39) zum Verlegen eines Drahts (5) aufweist, das es ermöglicht, das "Brechen" eines Drahts (5) automatisch zu beheben, das von den Mitteln (26) zur Überwachung des Vorhandenseins und der korrekten Positionierung der Drähte (5) festgestellt wird.
